# EUROPÄISCHE PATENTANMELDUNG

(11) **EP 1 675 242 A1**
(43) Veröffentlichungstag der Anmeldung: **28.06.2006**
(21) Anmeldenummer: 05112271.1
(22) Anmeldetag: 16.12.2005
(51) Int. Cl.: H02G 13/00, G01W 1/16

(54) **Vorrichtung zur Bestimmung des blitzeinschlagsbedingten Schadensrisikos bei baulichen Anlagen**

(30) Priorität: 21.12.2004 DE 202004019940 U
(71) Anmelder: SIEMENS AKTIENGESELLSCHAFT, 80333 München (DE)
(72) Erfinder: Buff, Ulrich-Joachim, 15569 Woltersdorf (DE); Fußy, Michael, 12619 Berlin (DE)

(57) **Zusammenfassung**

Die Neuerung betrifft eine Vorrichtung zur Bestimmung des blitzeinschlagsbedingten Schadensrisikos bei baulichen Anlagen. Um den Aufwand zu verringern, wird die Blitzdichte des Standortes der baulichen Anlage aufgrund der bekannten Blitzdichte des zugehörigen Kfz-Kennzeichenbereiches ermittelt, wobei anhand der Blitzdichte, anlagenspezifischer Parameter, insbesondere Art und Anzahl von Versorgungsleitungen, und gegebenenfalls eines Sicherheitszuschlages mittels eines Exceltools die erforderliche Erderlänge mindestens eines Blitzschutzfundamenterders, die Mindestanzahl von Blitzableitern und ein Mindesttrennungsabstand von blitzeinschlagsgefährdeten Anlagenteilen, insbesondere Versorgungsleitungen, ermittelt wird.

## Beschreibung

Die Neuerung betrifft eine Vorrichtung zur Bestimmung des blitzeinschlagsbedingten Schadensrisikos bei baulichen Anlagen.

Die Parameter zur Dimensionierung von Blitzschutzanlagen sind in einschlägigen Normen, beispielsweise VDE 0185/1-4, vorgegeben. Durch die Neuordnung der europäischen Normung sind weitere Parameter hinzugekommen. Entsprechend erhöht sich der Aufwand zur Ermittlung der Blitzschutzrisiken.

Bei herkömmlicher Verfahrensweise ohne Toolunterstützung kann der Aufwand mehrere Arbeitstage umfassen.

Der Neuerung liegt die Aufgabe zugrunde, eine Vorrichtung der gattungsgemäßen Art anzugeben, durch die der Aufwand erheblich verringert ist.

Neuerungsgemäß wird die Aufgabe durch die kennzeichnenden Merkmale des Schutzanspruchs gelöst. Danach wird die in der neuen Norm geforderte Berechnung komplett durch eine zweite Einrichtung, insbesondere ein Microsoft-Excel-Tool, in Verbindung mit einer ersten Einrichtung, insbesondere ein Register, umgesetzt. Die Berechnung lässt sich dadurch zeitlich erheblich verkürzen, beispielsweise auf ca. eine halbe Stunde. Das Ändern von Parametern ist mit minimalem Aufwand möglich. Alle Ergebnisse lassen sich problemlos ausdrucken, wobei eine übersichtliche Darstellung bei freiem Umfang der Ausdrucke möglich ist.

Das excelbasierte Planungstool dient der Abschätzung des Schadensrisikos für bauliche Anlagen durch Blitze. In einer Startmaske werden die für die Risikoermittlung erforderlichen Bearbeitungsschritte dargestellt. Diese sind über Buttons, die in der erforderlichen Schrittfolge nummeriert sind, wählbar. Nach der Eingabe allgemeiner Angaben zum Projekt und zu der zu untersuchenden baulichen Anlage werden ortsabhängige Gefährdungsparameter eingegeben. Durch die Eingabe des Kfz-Kennzeichenbereichs des untersuchten Standorts in die erste Einrichtung lässt sich die zugehörige Blitzdichte ermitteln. Hilfreich dazu ist ein Register, das in Abhängigkeit von dem eingegebenen Kfz-Kennzeichen die ortsspezifische Blitzdichte zuordnet. Falls der genaue Wert für die Blitzdichte bekannt ist, kann dieser auch direkt manuell in die zweite Einrichtung eingegeben werden. Ein Sicherheitszuschlag, der gemäß der Vornorm empfohlen wird, kann zusätzlich berücksichtigt werden. Vorzugsweise enthält jede Maske sämtliche für die gerade durchzuführende Berechnung erforderlichen Parameter, wobei Ergebnisse in der jeweiligen Maske direkt angezeigt werden. Durch logische Menüführung gelangt der Anwender immer zum nächsten erforderlichen Schritt der Berechnung und wird quasi bis zum Abschluss geführt.

Vorzugsweise sind gesonderte Masken für alle Parameter vorhanden, um Wahrscheinlichkeiten, Reduktions- und Schadensfaktoren zentral ändern zu können.

Durch ständige Anzeige der Risikokomponenten lässt sich mit einem Blick erkennen, welche Parameter noch nicht den gewünschten Anforderungen entsprechen. Durch Anklicken der Risikokomponenten, die zu einer Änderung der zugehörigen Parameter führen, lassen sich diese optimieren.

Eine Kurzfassung des Gesamtberechnungsergebnisses erscheint permanent auf der Startseite des Tools, so dass man auch an dieser Stelle stets einen Überblick über das Resultat der Berechnungen erhält.

In einer Auswahlmaske kann die gewünschte Berechnung vorgegeben werden.

Ein Druckmenü dient dem Druck der gewünschten Berechnungen, wobei die ausgewählten Seiten direkt an einen angeschlossenen Standarddrucker verschickt werden können.

Hinweise zu den geltenden Vorschriften und weitere Hilfen sind an verschiedenen Stellen des Tools eingefügt. Das kann beispielsweise eine Übersicht von Erdwiderständen bestimmter Böden oder eine Kurzdarstellung zu Blitzschutzfundamenterdern nach DIN 18014 betreffen.

Mit dem Tool können die erforderlichen Erderlängen des Blitzschutzfundamenterders der baulichen Anlage und der Trennungsabstand von auf oder an dieser Anlage befindlichen Anlagenteile, insbesondere Versorgungsleitungen, sowie die Mindestanzahl der erforderlichen Blitzableiter ermittelt werden.

Die Neuerung beschränkt sich nicht auf das oben beschriebene Planungstool. Vielmehr ist eine Anzahl von Varianten denkbar, welche auch bei grundsätzlich andersartiger Ausführung von den Merkmalen der Neuerung Gebrauch machen.

## Patentansprüche

1. Vorrichtung zur Bestimmung des blitzeinschlagsbedingten Schadensrisikos bei baulichen Anlagen,
**dadurch gekennzeichnet,**
**dass** eine erste Einrichtung zur Ermittlung einer Blitzdichte des Standortes der baulichen Anlage aufgrund der bekannten Blitzdichte des zugehörigen Kfz-Kennzeichenbereiches und eine zweite Einrichtung zur Ermittlung einer erforderlichen Erderlänge mindestens eines Blitzschutzfundamenterders, einer Mindestanzahl von Blitzableitern und eines Mindesttrennungsabstandes von blitzeinschlagsgefährdeten Anlagenteilen, insbesondere Versorgungsleitungen, anhand der Blitzdichte, anlagenspezifischer Parameter, insbesondere Art und Anzahl von Versorgungsleitungen, und gegebenenfalls eines Sicherheitszuschlages, vorgesehen sind.
